# EUROPEAN PATENT APPLICATION

(11) **EP 1 302 224 A2**
(43) Date of publication of application: **16.04.2003**
(21) Application number: 02022336.8
(22) Date of filing: 08.10.2002
(51) Int. Cl.: A63F 13/10

(54) **Recording medium storing game screen display program, game screen display program, game screen display method, and video game device**

(30) Priority: 10.10.2001 JP 2001313057
(71) Applicant: Konami Corporation, Chiyoda-ku, Tokyo (JP)
(72) Inventor: Higashiyama, Makoto, Kita-ku, Osaka-shi, Osaka (JP); Nagayama, Kentaro, Kita-ku, Osaka-shi, Osaka (JP)
(74) Representative: Müller-Boré & Partner Patentanwälte

(57) **Abstract**

A game screen display program, enabling a user to easily acquire knowledge of video game operation, is provided. A CPU 1 uses a graphic data generation processor 3 or similar to create user operation images depicting movement of a snowboarder character according to user operations accepted by a controller 19, reads from main memory 5 and reproduces operation explanation images which explain model operations to the user, and display the user operation images and operation explanation images simultaneously on a television monitor 21.

## Description

### BACKGROUND OF THE INVENTION

### 1. Field of the Invention

This invention relates to a video game device, comprising an operating unit to accept user operations and a display unit to display a game screen, and which displays a game screen according to user operations, as well as to a recording medium storing a game screen display program, a game screen display program, and game screen display method used in the video game device.

### 2. Description of the Related Art

In the prior art, video game devices are known in which a user manipulates a character in a game space, and plays a video game with a sports or other motif. On the other hand, in recent years game content has become more sophisticated and complex due to advances in video game device hardware, and this has been accompanied by a trend toward greater sophistication and complexity in the operations demanded of the user. Consequently a new practice mode, to provide practice in the operation necessary for the video game, is provided; in this practice mode, after a model operation which is to be used as a model for operation has been explained, the user practices operations and can acquire the operation skills required by the video game.

However, in the above practice mode of the prior art, after model operation has been explained, that is, when a screen related to model operation is no longer displayed, the user practices the operation; hence the user cannot view the model operation during operation practice, and when the operation is complex or non-intuitive, it is difficult to acquire the operation skill. This tendency is particularly marked when the user is a novice; the novice cannot learn the operation necessary for the video game, and so cannot fully appreciate the appeal intrinsic to the video game.

### SUMMARY OF THE INVENTION

In order to resolve the above problem, the present invention has as an object the provision of a game screen display program, game screen display method, and video game device which enable a user to easily acquire operation skills.

According to the present invention, a recording medium storing a game screen display program, which employs a video game device comprising an operating unit for accepting user operations and a display unit for displaying a game screen and displays game screen according to user operations, and which causes the above video game device to function as: storage means, which stores moving images (or animated images) created in advance as operation explanation images in order to explain model operation of the above operating unit to the user; image creation means, which creates user operation images according to user operations accepted by the above operating unit; and display control means, which reproduces operation explanation images stored by the above storage means when displaying user operation images created by the above image creation means on the above display unit, and simultaneously displays the above user operation images and operation explanation images for the user operation images on the above display unit.

According to the invention as described in the above, a game screen display program which uses a video game device, comprising an operating unit for accepting t user operations and a display unit for displaying game screens and displays game screens according to user operations, causes the video game device to function as storage means, which stores moving images created in advance as operation explanation images to explain model operations for the operating unit to the user; image creation means, which creates user operation images according to user operations accepted by the operating unit; and display control means, which reproduces operation explanation images stored by the storage means when displaying user operation images created by the image creation means on the display unit, and simultaneously displays user operation images and operation explanation images for the user operation images.

In other words, by means of a video game device comprising an operating unit for accepting user operations and a display unit for displaying game screens, moving images created in advance as operation explanation images to explain model operation of the operating unit to the user are stored, user operation images are created according to user operations received by the operating unit, and when a created user operation image is displayed on the display unit, a stored operation explanation image is reproduced, and the operation explanation image for the user operation image is displayed simultaneously with the user operation image on the display unit.

Hence the user can simultaneously view user operation images corresponding to his own operations and operation explanation images for the user operation images, and so can practice operation while viewing operation explanation images for the operation in question during operation. For example, if during operation the user does not understand the next operation, by referring to an operation explanation image, the next operation can be learned, and so understanding of the video game operation can be easily acquired.

Also, an operation explanation image comprises moving images, so that compared with the use of only a still image, more information can be imparted to the user. Hence operations can be explained to the user in a more easily understood manner, and so the user can more easily acquire an understanding of the video game operation.

These and other objects, features, and advantages of the present invention will become more apparent upon reading the following detailed description along with the accompanying drawings.

### BRIEF DESCRIPTION OF THE DRAWINGS

Fig. 1 is a block diagram showing the configuration of a video game device as one aspect of the invention;
Fig. 2 is a block diagram of principal functions of the video game device shown in Fig. 1;
Fig. 3 is a flowchart showing an example of game screen display processing in practice mode;
Fig. 4 is a screen view showing an example of a game screen for the case in which the operation explanation image for practice subject 2 is enlarged and displayed;
Fig. 5 is a screen view showing an example of a game screen for the case in which the operation explanation image for practice subject 2 is reduced and displayed; and,
Fig. 6 is a flowchart showing an example of synchronous game screen display processing in practice mode.

### DESCRIPTION OF THE PREFERRED EMBODIMENTS

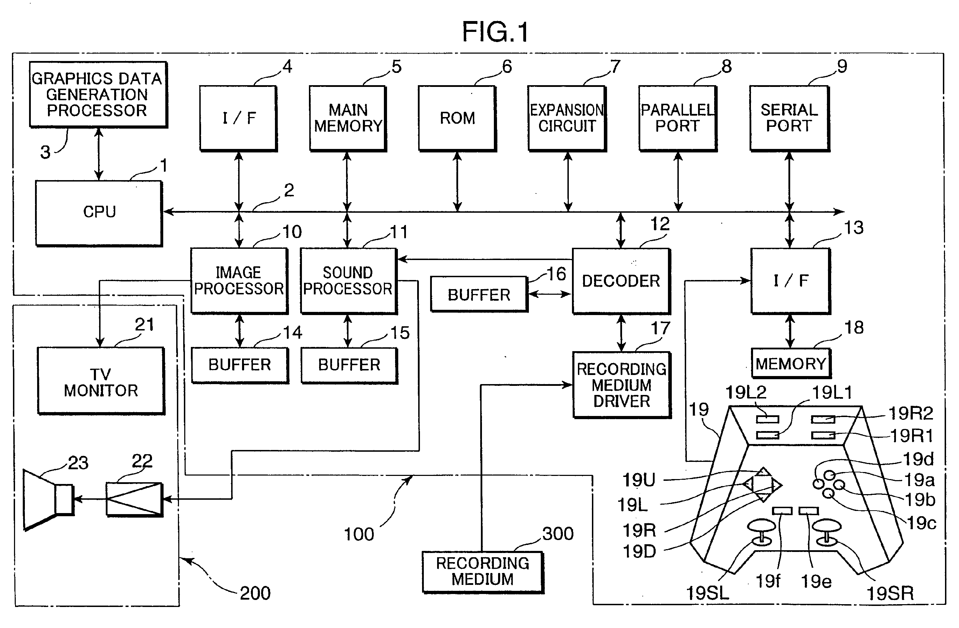

Below, the video game device of an aspect of this invention is explained, referring to the drawings. Fig. 1 is a block diagram showing the configuration of the video game device of an aspect of this invention.

In the following explanation, as an example of a video game, a snowboarding game is explained in which a points are awarded according to prescribed feats performed by a snowboarding character (a character representing a snowboarder, standing on a snowboard) which can be manipulated by the user in a game space. However, this invention is not limited to this example, and application to a variety of games is possible, so long as it is necessary that the user learn operations necessary to play the video game; for example, application to other sports games, to fighting games, to simulation games, to shooting games, to role-playing games, and to other games is possible.

The video game device shown in Fig. 1 comprises a home-use game system 100 and a home-use television set 200. Computer-readable recording media 300, on which is recorded a game program, is loaded into the home-use game system 100.

The home-use game system 100 comprises a CPU (central processing unit) 1, bus line 2, graphic data generation processor 3, interface circuit (I/F) 4, main memory 5, ROM (read-only memory) 6, expansion circuit 7, parallel port 8, serial port 9, image processor 10, sound processor 11, decoder 12, interface circuit 13, buffers 14 to 16, recording media drive 17, memory 18, and controller 19. The home-use television set 200 comprises a television monitor 21, amplifier circuit 22, and speaker 23.

The CPU 1 is connected to the bus line 2 and the graphic data generation processor 3. The bus line 2 comprises an address bus, data bus, and control bus, and interconnects the CPU 1, interface circuit 4, main memory 5, ROM 6, expansion circuit 7, parallel port 8, serial port 9, image processor 10, sound processor 11, decoder 12, and interface circuit 13.

The image processor 10 is connected to the buffer 14. The sound processor 11 is connected to the buffer 15. The decoder 12 is connected to the buffer 16 and to the recording media drive 17. The interface circuit 13 is connected to the memory 18 and controller 19.

The television monitor 21 of the home-use television set 200 is connected to the image processor 10. The speaker 23 is connected to the sound processor 11 via the amplifier circuit 22.

The video game device to which this invention is applied is not limited in particular to a home-use video game device comprising a home-use game system 100 and home-use television set 200 as shown in Fig. 1; application to commercial-use video game equipment configured integrally with a monitor, and to a personal computer or workstation which functions as video game equipment by executing a video game program, is similarly possible.

In the case of commercial-use video game equipment, the television monitor 21, amplifier circuit 22 and speaker 23 are housed in a single housing together with each of the units comprised by the home-use game system 100.

When the video game device is configured with a personal computer or similar as the core, the computer display corresponds to the television monitor 21. The expansion circuit 7, image processor 10 and sound processor 11 correspond to prescribed programs recorded on a hard disk or other recording media, or to prescribed hardware on an expansion board installed in an expansion slot. The interface circuit 4, parallel port 8, serial port 9, and interface circuit 13 corresponding to prescribed hardware on an expansion board installed in an expansion slot of the computer. Also, the buffers 14 to 16 each correspond to a storage area in main memory or expansion memory.

Next, each of the constituent components shown in Fig. 1 is explained. The graphic data generation processor 3 plays the role of a so-called coprocessor to the CPU 1. Specifically, the graphic data generation processor 3 performs coordinate transformation processing, light source calculation processing and similar, performing, for example, fixed-point matrix and vector operations through parallel processing.

The main processing performed by the graphic data generation processor 3 includes computing address data for an image for processing in a prescribed display area and returning the results to the CPU 1, processing to calculate the brightness of an image according to the distance from a virtually set light source, and similar, based on the coordinate data, movement data, rotation data and similar for each vertex of image data provided by the CPU 1 in two-dimensional or three-dimensional space.

The interface circuit 4 is used as the interface with peripheral devices such as, for example, a mouse, trackball, or other pointing device or similar. The main memory 5 comprises RAM (random access memory) or similar. The ROM 6 stores a program which serves as the operating system of the video game device. This program corresponds to, for example, the BIOS (basic input-output system) of a personal computer.

The expansion circuit 7 performs decompressions processing of compressed image data, compressed by means of intra-coding conforming to the MPEG (Moving Picture Engineering Group) standard for moving images and the JPEG (Joint Picture Engineering Group) standard for still images. Decompression processing comprises decoding (decoding of data encoded using a VLC, or variable-length code), inverse quantization processing, IDCT (inverse discrete cosine transform) processing, and processing to restore intra-image data.

The image processor 10 performs imaging (drawing) processing on a buffer 14 based on an image (drawing) instruction, issued by the CPU 1 at prescribed time intervals T (for example at each frame, T=1/60 second).

The buffer 14 comprises RAM, for example, and is divided into a display area (frame buffer) and non-display area. The display area comprises an expansion area for data to be displayed on the display screen of the television monitor 21. The non-display area comprises storage areas for data defining skeletons, model data defining polygons, animation data which causes models to move, pattern data indicating the content of each animation, texture data, and color palette data.

Here, the texture data is two-dimensional image data; color palette data is data used to specify colors for texture and other data. This data is recorded in the non-display area of the buffer 14 by the CPU 1 from the recording media 300, either all at once, or in several operations according to the game progress.

Also, as drawing (imaging) instructions, there are rending instructions to render a three-dimensional image using polygons, and drawing instructions to render ordinary two-dimensional images. As polygons, polygonal two-dimensional virtual figures such as triangles are used.

Drawing instructions to render a three-dimensional image using polygons are performed for polygon vertex address data, indicating the stored positions of polygon vertex coordinate data in the display area of the buffer 14; texture address data, indicating the storage positions in the buffer 14 of texture data for application to polygons; color palette address data, indicating the storage positions in the buffer 14 of color palette data representing the colors for texture data; and brightness data, indicating the brightness of textures.

Of the above data types, polygon vertex address data in the display area is polygon vertex coordinate data in a two-dimensional plane obtained by coordinate transformation of polygon vertex coordinate data in a three-dimensional space, which the graphic data generation processor 3 outputs from the CPU 1 based on movement data and rotation data. Brightness data is data determined by the graphic data generation processor 3, based on the distance from the positions represented by the polygon vertex coordinate data after the above coordinate transformations to a virtually positioned light source.

The polygon vertex address data indicates addresses in the display area of the buffer 14; the image processor 10 performs processing to write texture data corresponding to a display area of the buffer 14 indicated by three polygon vertex address data values.

Here a character or other object in the game space consists of a plurality of polygons; the CPU 1 stores coordinate data in three-dimensional space for each polygon in the buffer 14, associated with corresponding skeleton vector data. When a character is moved, a character action is represented, or the viewpoint of a character is changed on a game screen displayed by the television monitor 21 according to operation of the controller 19, described below, the following processing is performed.

The CPU 1 provides the graphic data generation processor 3 with three-dimensional coordinate data of the vertices of each polygon held in the non-display area of the buffer 14, and with movement data and rotation data for each polygon, computed from the skeleton coordinate data and rotation data. The graphic data generation processor 3 calculates in order three-dimensional coordinate data after movement and rotation of each polygon, based on the three-dimensional coordinate data of the vertices of each polygon and on movement data and rotation data.

Of the three-dimensional coordinate data for each polygon computed in this way, coordinate data in the horizontal and vertical directions is supplied to the image processor 10 as address data in the display area of the buffer 14, that is, as polygon vertex address data.

The image processor 10 writes texture data specified by texture address data allocated in advance to triangular-shape display areas in the buffer 14 indicated by three polygon vertex address data values. By this means, an object, represented by a plurality of polygons to which texture data is applied, is represented on the display screen of the television monitor 21.

Drawing instructions to render normal two-dimensional images are performed for vertex address data, texture address data, color palette address data indicating the storage position in the buffer 14 of color palette data representing the color of texture data, and brightness data indicating the brightness of a texture. Of these data types, vertex address data is coordinate data obtained by coordinate transformation of vertex coordinate data on a two-dimensional plane output by the graphic data generation processor 3 from the CPU 1, based on movement data and rotation data output from the CPU 1.

The sound processor 11 stores ADPCM (adaptive differential pulse code modulation) data read from the recording media 300 in the buffer 15, and ADPCM data stored in the buffer 15 is used as a sound source. The sound processor 11 reads ADPCM data from the buffer 15 based on, for example, a clock signal of frequency 44.1 kHz, performs processing of the ADPCM data read in this way such as pitch conversion, noise addition, envelope setting, level setting, and reverb addition, and then outputs the corresponding audio from the speaker 23.

On the other hand, when audio data read from the recording media 300 is CD-DA (Compact Disc Digital Audio) or other PCM data, the sound processor 11 converts this PCM data into ADPCM data. Processing of PCM data by the program is performed directly in main memory 5. The PCM data processed in main memory 5 is supplied to the sound processor 11, and after conversion into ADPCM data, the various processing described above is performed, and audio is output from the speaker 23.

The recording media drive 17 comprises, for example, a CD-ROM drive, DVD drive or similar, which reads image data, audio data, and program data from recording media 300 such as a CD-ROM or DVD disc or similar, and supplies the data thus read to the decoder 12. The recording media drive is not limited to the above examples, but may also be a hard disk drive, optical disc drive, flexible disk drive, silicon disk drive, or cassette media reader; in these cases, a hard disk, optical disk, flexible disk, semiconductor memory, or similar is used as the recording media.

The decoder 12 performs error correction processing of data read by the recording media drive 17 using an ECC (error correction code), and data resulting from error correction processing is supplied to main memory 5 or to the sound processor 11. The memory 18 may comprise, for example, card-type memory incorporating semiconductor memory, and is used to store various game parameters when for example a game is interrupted before completion.

The controller 19 is an operation device used for input of various operation instructions by the user; operation signals corresponding to user operations are sent to the CPU 1. The controller 19 is provided with a first left button 19L1, a second left button 19L2, a first right button 19R1, a second right button 19R2, an up key 19U, a down key 19D, a left key 19L, a right key 19R, a first button (triangle-button) 19a, a second button (circle-button) 19b, a third button (X-button) 19c, a fourth button (square-button) 19d, a select button (SELECT button) 19e, a start button 19f, a left joystick 19SL, and a right joystick 19SR.

The up key 19U, down key 19D, left key 19L, and right key 19R are used to, for example send commands to the CPU 1 to move a character or cursor up, down, left, and right on the screen of the television monitor 21.

The start button 19f is used to instruct the CPU 1 to load the game program from the recording media 300. The select button 19e is used to instruct the CPU 1 to make various selections related to the game program loaded into main memory 5 from the recording media 300.

Each of the buttons and keys of the controller 19, with the exceptions of the left joystick 19SL and right joystick 19SR, is configured as an on-off switch which is turned on by depression from a neutral position by a depressing force from outside, and which returns to the above neutral position and the off state when the depressing force is removed.

The left joystick 19SL and right joystick 19SR are stick-type controllers with substantially the same configuration as an ordinary joystick. That is, the left joystick 19SL and right joystick 19SR are configured from a stick or similar which is substantially upright, in an inclinable state with a prescribed position as a point of support, and which can be inclined through 360° including forward, backward, right, and left. The left joystick 19SL and right joystick 19SR send the values of the x-coordinate in the lateral direction and the y-coordinate in the anteroposterior direction, with the upright position as the origin, to the CPU 1 via the interface circuit 13, according to the direction of inclination and inclination angle of the joystick.

The first left button 19L1, second left button 19L2, first right button 19R1, and second right button 19R2 are used for various functions according tot he game program loaded from the recording media 300.

Next, action of the above video game device is explained in summary. When the recording media 300 is loaded into the recording media drive 17, if the power supply switch (not shown) is turned on to supply power to the home-use game system 100, the CPU 1 instructs the recording media drive 17 to read the game program from the recording media 300, based on an operating system stored in ROM 6. By this means, the recording media drive 17 reads image data, audio data, and game program data from the recording media 300. The image data, audio data and game program data read in this way is supplied to the decoder 12, and the decoder 12 performs error correction processing for each data type.

Image data which has been error-corrected by the decoder 12 is supplied to the expansion circuit 7 via the bus line 2. After decompression processing by the expansion circuit 7, image data is supplied to the image processor 10, and is written to the non-display area of the buffer 14 by the image processor 10. Audio data which has been error-corrected by the decoder 12 is either written to main memory 5, or is supplied to the sound processor 11 and written to the buffer 15. Game program data which has been error-corrected by the decoder 12 is written to main memory 5.

Subsequently, the CPU 1 advances the video game based on the game program stored in main memory 5 and on operations by the user using the controller 19. For example, the CPU 1 controls image processing, audio processing and internal processing appropriately according to operations of the user using the controller 19.

As control of image processing, for example, coordinate data for each skeleton and polygon vertex coordinate data are calculated from pattern data corresponding to movements specified for a character, and the three-dimensional coordinate data and viewpoint position data obtained is supplied to the graphic data generation processor 3; also, drawing instructions are issued for address data and brightness data in the display area of the buffer 14, computed by the graphic data generation processor 3.

As control of audio processing, for example, audio output commands are issued to the sound processor 11, and level, reverb, and other specifications are made. As control of internal processing, for example, computations are performed in response to operation of the controller 19.

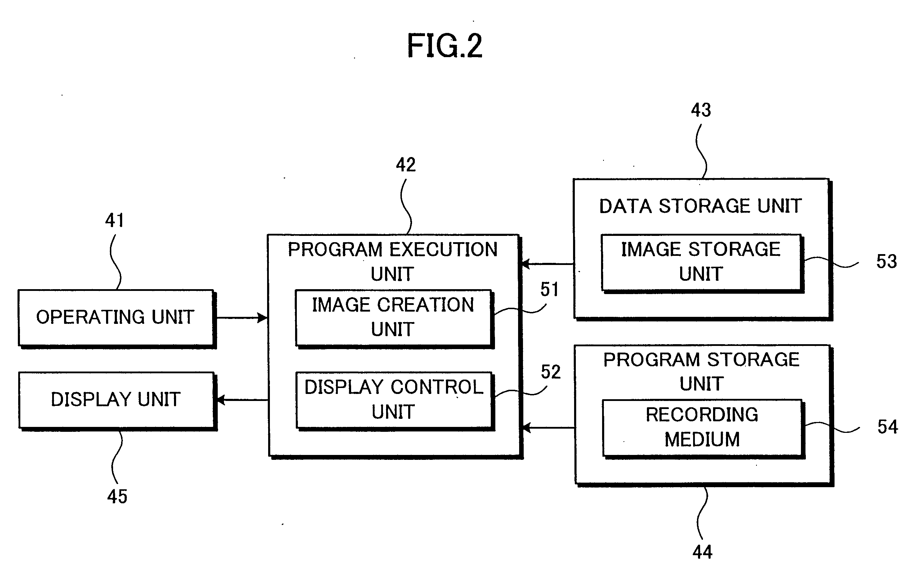

Next, the principal functions of a video game device are explained for the case in which a snowboarding game is played using a video game device configured as described above. Fig. 2 is a block diagram of principal functions of the video game device shown in Fig. 1.

As shown in Fig. 2, the video game device functionally comprises an operating unit 41, program execution unit 42, data storage unit 43, program storage unit 44, and display unit 45.

The operating unit 41 comprises a controller 19 or similar, which receives operations by the user who is playing the snowboarding game, and outputs received operation instructions to the program execution unit 42. For example, the operating unit 41 receives an operation on a snowboarding character which is a character that can be manipulated by the user in a game space, and outputs to the program execution unit 42 an action instruction specifying an action of the snowboarding character.

The program storage unit 44 comprises a recording media drive 17 or similar, as well as computer-readable recording media 54. The recording media 54 comprises recording media 300, and stores, as a game program, a game progress control program which comprises a game screen display program. When the game progress control program comprising the game screen display program is read from the recording media 54, and the program is recorded in main memory 5, the main memory 5 functions as a program storage unit 44.

The data storage unit 43 comprises main memory 5, and functions as an image storage unit 53. The image storage unit 53 stores moving images created in advance as operation explanation images in order to explain model operation of the operating unit 41 to the user. These operation explanation images comprise moving image data, created in advance as so-called movies for each practice subject, and are stored as a portion of the game program on the recording media 300, and recorded from the recording media 300 to main memory 5.

As the above operation explanation images, model action images comprising moving images showing the model actions of a snowboarding character, for example, are used. No particular restrictions are placed on the standards for the moving image data used as operation explanation images; for example, moving image data compressed according to the MPEG standard can be used.

The program execution unit 42 comprises the CPU 1, graphic data generation processor 3, and image processor 10; by executing the game screen display program stored in main memory 5, the CPU 1 functions as an image creation unit 51 and display control unit 52. The image creation unit 51 is realized primarily through the functions of the graphic data generation processor 3; the display control unit 52 is realized mainly through the functions of the image processor 10.

The image creation unit 51 creates user operation images according to user operations received by the operating unit 41. For example, as a user operation image, the image creation unit 51 may create a character action image in which a snowboarding character acts according to action instructions received by the operating unit 41. When, as described below, the display control unit 52 enlarges and displays the operation explanation image, the image creation unit 51 halts the user operation image at the start of enlargement and display, without receiving user operations from the operating unit 41.

When, in the practice mode enabling the user to practice operation of the operating unit 41 in the snowboarding game, a user operation image created by the image creation unit 51 is displayed on the display unit 45, the display control unit 52 reproduces the operation explanation image stored in the image storage unit 53, and displays the user operation image simultaneously with an operation explanation image for the user operation image on the display unit 45.

For example, the display control unit 52 displays the above character action image and model action image on the display unit 41 simultaneously, in a display manner enabling discrimination of the model action image from the character action image. At this time, the display control unit 52 enlarges or reduces the model action image according to operation of the user using the operating unit 41, and displays the model action image superposed on the character action image; when enlarging the model action image for display, the model action image is displayed substantially in the center position of the display screen of the display unit 45, and when the model action image is reduced and displayed, the model action image is displayed near an edge of the display screen of the display unit 45, for example, with the display screen divided into two rows and two column and the model action image displayed in one of the four quarters of the screen.

The display control unit 52 displays, on the display unit, explanatory text which explains operations necessary to perform the model action shown by the model action image when a model action image is displayed, in a state which is halted for a prescribed length of time. This halted state may be a state in which reproduction is temporarily halted while the display control unit 42 displays the explanatory text on the model action image, or this state may be realized by displaying a stationary image, or image data may be inserted into the model action image itself such that a halted state in which the explanatory text is displayed for a prescribed length of time is realized.

The display unit 45 comprises a television monitor 21, and simultaneously displays a user operation image like those described above and an operation explanation image for the user operation image.

Thus in this aspect, the controller 19 is equivalent to the operating unit, the television monitor 21 is equivalent to the display unit, the main memory 5 or similar is equivalent to the storage means, the CPU 1 and graphic data generation processor 3 or similar are equivalent to the image creation means, and the CPU 1 and image processor 10 or similar are equivalent to the display control means.

Next, the practice mode of a snowboarding game using a video game device configured as described above is explained in detail. First, the user operates the controller 19 to start the snowboarding game, and on selecting practice mode from a main menu, a practice mode for practice in order of a plurality of practice subjects is initiated.

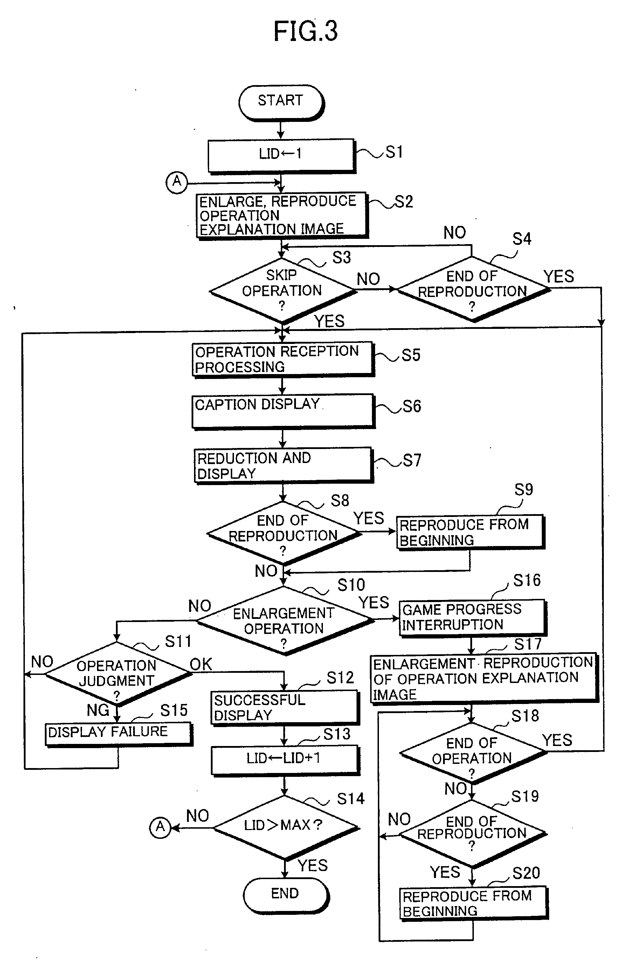

Fig. 3 is a flowchart showing an example of game screen display processing in practice mode. The game screen display processing shown in Fig. 3 is processing performed through execution of a game screen display program by the CPU 1 or similar.

In step S1 shown in Fig. 3, the CPU 1 performs the necessary initial settings, and sets the variable LID indicating the lesson number of the practice currently being executed to "1". In this snowboarding game, ten different types of practice (practice subjects 1 to 10) can be performed in practice mode; for example, a value of the variable LID of "1" indicates the practice subject 1 of lesson number 1, and a value for the variable LID of "2" indicates practice subject 2 of lesson number 2. The types of practice in practice mode are not limited to the above example, and other numbers of practice types may be performed; also, it may be possible for the user to select a desired practice subject from among a plurality of practice subjects.

In the next step S2, the CPU 1 reads from main memory an operation explanation image which explains model operation for the movie file of the lesson number specified by the value of the variable LID--for example, if the value of the variable LID is "1", the practice subject 1 associated with lesson number 1 (a model action image representing model action of the snowboarder character for practice subject 1); the image processor 10 is used to enlarge and display the operation explanation image read in this way on the display screen of the television monitor 21. The filename of the movie field, character string of the caption display message and similar are stored in main memory 5, in table format, associated with the value of the variable LID.

At this time, the CPU 1 does not receive user operations for the snowboarder character from the controller 19, and the user operation image for practice of operations by the user (a character action image, in which the snowboarder character performs actions according to user operations) is displayed in a halted state by the graphic data generation processor 3 and image processor 10, or similar.

In this snowboarding game, for example, in practice subject 1 a practice is provided in which a kicker (jumping platform) is used to practice an "ollie" (jump); as the operation explanation image for the practice subject 1, the model action of the snowboarder character is displayed using moving images, and as the explanatory text, "Approach the kicker, press down the X button, and prepare for the ollie (jump)," "on releasing the button, the ollie is performed. (The height changes depending on the strength and the timing with which the button is released)," and "Adjust the direction and angle of the board with the left joystick when landing" are displayed with respective stationary images. As the caption display message, "Use the kicker to nail a big ollie!!" is displayed, while moving at a prescribed speed to the top part of the display screen.

In practice subject 2, a practice to perform a grab operation (grabbing the snowboard with the hands) is provided; as the operation explanation image for practice subject 2, the model action of the snowboarder character in this case is displayed using moving images, and as the explanatory text "On pressing the square-button or circle-button while in midair, the board can be grabbed (there are other combinations also)" is displayed with a stationary image. As the caption display message for this practice subject, "Do an ollie to jump, and do a cool board-grab in midair!!" is displayed, while moving at a prescribed speed to the top part of the display screen.

In practice subject 3, practice of a first spin operation is provided; as the operation explanation image for practice subject 3, model action of the snowboarder character in this case is displayed using moving images, and as the explanatory text, "Approach the kicker, and while pressing the X button, move the left joystick to the left or right," and "With the left joystick pressed, release the X button to do a side-spin" are displayed with respective stationary images. As the caption display message for this practice subject, "Do a spin in midair following an ollie jump!!" is displayed, while moving at a prescribed speed to the top part of the display screen.

Similarly to the above, in practice subjects 4 to 10 a trick practice, second spin practice, flip practice, pipe practice, and first through third rail practices are provided, respectively; the practice subjects 1 to 10 are set such that the operation contents become more sophisticated (difficult) in that order.

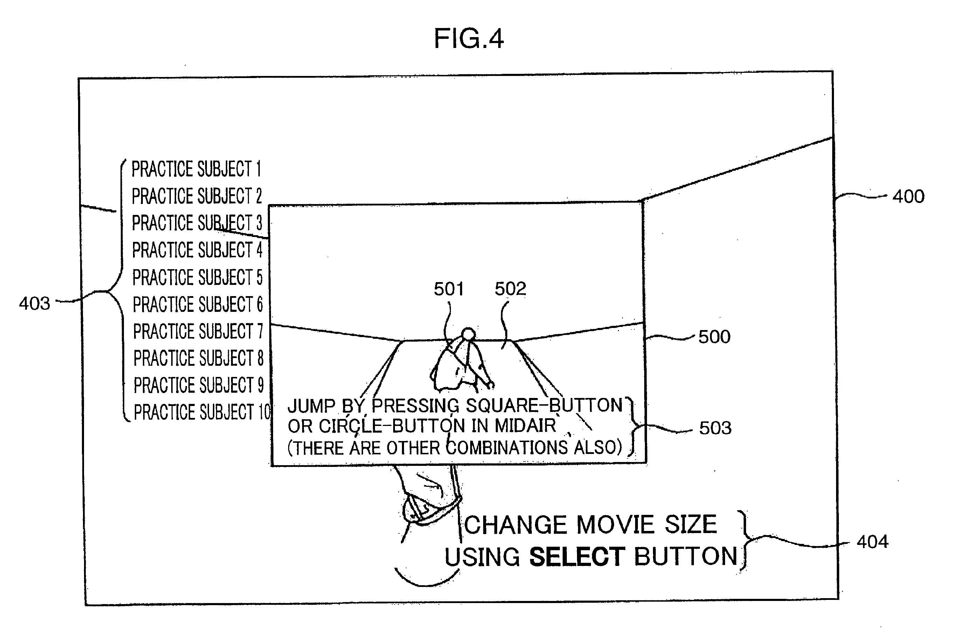

Fig. 4 is a screen drawing showing an example of a game screen for the case in which the operation explanation image for practice subject 2 is enlarged and displayed. As shown in Fig. 4, an enlarged display window 500 is used to enlarge and display the operation explanation image for the practice subject 2 in the center position of the game screen 400. Model action of the snowboarder character 501 performing a grab is displayed using moving images in the enlarged display window 500; when the snowboarder character 501 approaches the jumping platform 502, "Press the square-button or circle-button while in midair to perform a grab (there are other combinations also)" is displayed as the explanatory text 503, and the next operation to be performed by the user is displayed in text form.

At this time, the operation explanation image of the practice subject 2 in the enlarged display window 500 is halted for a prescribed length of time, for example several seconds, and then the model action of the snowboarder character 501 is resumed, and the model action of the snowboarder character 501 is displayed continuously using moving images. Hence while the operation explanation image of the practice subject 2 is halted, the user has sufficient time to understand the operation as explained by the explanatory text 503, and can also view the model action of the snowboarder character 501 through moving images. Thus even if the user is a novice, the practice content can be easily understood.

On the other hand, the user operation image for use in practice of the practice subject 2 by the user is displayed in a halted state in the game screen 400 excluding the enlarged display window 500, and when in this state, user operation of the snowboarder character 501 are not accepted from the controller 19.

Also, on the left side of the game screen 400, the practice subject item 403 showing the subject for practice by the user is displayed, and the practice subject 1, already completed by the user, is displayed using a display color different from the display color of other practice subjects (not shown). At the bottom of the game screen 400, as the size change operation explanation text 404, "Use the SELECT button to change the movie size" is displayed; when the user changes the size of the operation explanation image in order to begin practice, the operation explanation image of the practice subject 2 is reduced and displayed, as described below.

Next, in step S3, the CPU 1 judges whether the user has performed an operation to skip enlarged display of the operation explanation image using the controller 19; if a skip operation has been performed, processing proceeds to step S5, and if no skip operation is performed, processing proceeds to step S4. In judging whether a skip operation has been performed, if the above size change operation has been performed, that is, if the SELECT button 19e has been pressed by the user, it is judged that a skip operation has been performed. In this case, the SELECT button 19e, which is an operation member not used for character manipulation, is employed, so that a skip operation can be performed without any effect on character operation by the user. Depression of other buttons provided on the controller 19 may also be set as skip operations.

If a skip operation has not been performed, in step S4 the CPU 1 judges whether reproduction of the operation explanation image for the practice subject specified by the variable LID has been completed; if reproduction of the operation explanation image is not completed, processing returns to step S3, and subsequent processing is continued, whereas if reproduction of the operation explanation image has been completed, processing proceeds to step S5.

When a skip operation has been performed, or if reproduction of the operation explanation image is completed, in step S5 the CPU 1 begins acceptance operations on the snowboarder character by the user using the controller 19, similarly to normal game progress processing when the user is playing the snowboarding game, and user operation images for action of the snowboarder character are created according to these operations using the graphic data generation processor 3 or similar.

Next, in step S6 the CPU 1 uses the image processor 10 or similar to display a caption display message for the practice subject specified by the variable LID on the game screen of the television monitor 21.

Then, in step S7 the CPU 1 uses the image processor 10 or similar to reduce and display the operation explanation image for the practice subject specified by the variable LID on the display screen of the television monitor 21.

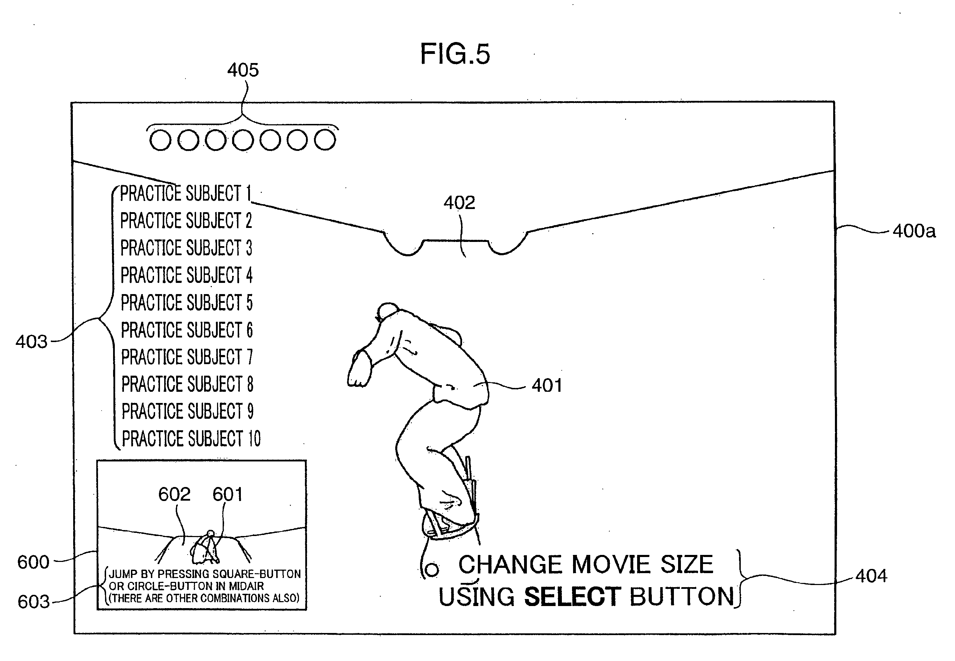

Fig. 5 is a screen drawing showing an example of a game screen for the case in which the operation explanation image for practice subject 2 is reduced and displayed. As shown in Fig. 5, a reduced display window 600 is used to reduce and display the operation explanation image for the practice subject 2 in the lower-left corner of the game screen 400a. The snowboarder character 601, jump platform 602, and explanatory text 603 are reduced and displayed in the reduced display window 600.

On the other hand, the user operation image for practice of the practice subject 2 by the user is displayed in the entirety of the game screen 400a, excluding the reduced display window 600. That is, the state in which the snowboarder character 401 manipulated by the user approaches the jump platform 402 is displayed in large size in the center of the game screen 400a. Also, as the caption display message 405 of the practice subject 2, "Do a cool grab in midair after an ollie jump!!" is displayed, while moving at a prescribed speed in the top part of the display screen.

At this time, user operations on the snowboarder character 401 from the controller 19 are received, the snowboarder character 401 performs actions according to user operations, and after the user thoroughly understands the operations of the practice subject 2, practice subject 2 can be practiced.

Next, in step S8 the CPU 1 judges whether reproduction of the operation explanation image for the practice subject specified by the variable LID is completed or not, and if reproduction of the operation explanation image is not completed, processing proceeds to step S10, whereas if reproduction of the operation explanation image is completed, processing proceeds to step S9, the operation explanation image for the practice subject specified by the variable LID is reproduced from the beginning, and then processing proceeds to step S10.

Next, in step S10 the CPU 1 judges whether an operation to enlarge the operation explanation image has been performed by the user using the controller 19; if no enlargement operation is performed, processing proceeds to step S11, and if an enlargement operation has been performed, processing proceeds to step S16. As judgment to determine whether an enlargement operation has been performed, when the above size change operation has been performed, that is, when the SELECT button 19e has been pressed by the user, it is judged that an enlargement operation has been performed. In this case, the SELECT button 19e, which is an operation member not used for character manipulation, is employed, so that the user can perform an enlargement operation without affecting character operation. Depression of other buttons provided on the controller 19 may also be set as enlargement operations.

If an enlargement operation has not been performed, in step S11 the CPU 1 checks user operations and the ski slope, jump platform and other topographical information in the game space, judges whether, for the practice subject specified by the variable LID, the user operation has succeeded or failed; if successful ("OK" in step S11), processing proceeds to step S12, and if a failure ("NG" in step S11), processing proceeds to step S15; if the user has not yet performed the operation ("NO" in step S11), processing returns to step S5 and subsequent processing is continued.

For example, in the ollie operation of practice subject 1, when the user uses the controller 19 to manipulate the action of the snowboarder character, so that the snowboarder character uses the kicker to perform an ollie and lands successfully, it is judged that the ollie operation of the user was successful. On the other hand, if the ollie is performed and the landing is a failure, or if the ollie is performed and the landing is successful, but the user performs unnecessary operations, the ollie operation of the user is judged to be a failure.

In the grab operation of practice subject 2, when the user uses the controller 19 to manipulate the action of the snowboarder character, so that the snowboarder character uses the kicker to perform an ollie, performs a grab in midair and lands successfully, it is judged that the grab operation of the user was successful. On the other hand, if the ollie is performed and the landing is successful but the grab is not performed, or if the ollie is performed and the landing is a failure, the grab operation of the user is judged to be a failure.

When a user operation is successful ("OK" in step S11), in step S12 the CPU 1 displays the message "GOOD" at a prescribed position on the game screen of the television monitor 21 using the image processor 10 or similar, to notify the user that the operation was successful.

Next, in step S13 the CPU 1 increments by one the variable LID, so that if the current value of the variable LID is 1, it is changed to a 2, and the variable LID indicates the practice subject 2 of lesson number 2.

Next, in step S14 the CPU 1 judges whether the current value of the variable LID exceeds the maximum value MAX (in the present aspect, there are ten types of practice subject, 1 to 10, so that MAX=10), and if the value of the variable LID does not exceed the maximum value MAX, processing proceeds to step S2 to perform the next practice, and subsequent processing is continued. If the value of the variable LID exceeds the maximum value MAX, the user has completed all the practices of the practice mode, and so processing is ended and control returns to the main menu.

On the other hand, if a user operation is a failure ("NG" in step S11), in step S15 the CPU 1 uses the image processor 10 or similar to display the message "BAD" at a prescribed position of the game screen on the television monitor 21, to notify the user that the operation is a failure, and then processing returns to step S5 and subsequent processing is continued, in order that the user can continue practice of the failed practice subject.

If the user does not perform an enlargement operation to again view the practice subject ("YES" in step S10), in step S16 the CPU 1 halts the acceptance of user operations to manipulate the snowboarder character from the controller 19, interrupts game progress, and uses the graphic data generation processor 3 and image processor 10 or similar to display a state in which the user operation image for practice of an operation is halted.

Next, in step S17 the CPU 1 reads from main memory 5 the operation explanation image for the practice subject specified by the value of the variable LID, and uses the image processor 10 or similar to enlarge and display the operation explanation image thus read on the display screen of the television monitor 21. For example, in the case of practice subject 2, a game screen such as shown in Fig. 4 is again displayed.

In this way, an operation explanation image which has been enlarged or reduced according to user operation using the controller 19 is displayed superposed on the user operation image, so that an operation explanation image can be displayed in a size suited to the user needs. When the user wishes to understand operations in greater detail, the operation explanation image can be enlarged and displayed in the center of the display screen so that the operation explanation image is easier to view; if the user wishes to concentrate on the operation, the operation explanation image can be reduced and displayed at an edge of the display screen, making the user operation image easier to view.

Changes in the display size through enlargement or reduction of the operation explanation image are not limited to the above examples; for example, display windows in three or more different sizes may be used, or the size of a display window may be changed freely to an arbitrary size according to user operations.

When the operation explanation image is enlarged and displayed, the user operation image is halted and no user operations are received from the controller 19, so that after viewing the operation explanation image and confirming the operation content, the user can again resume operation from the immediately preceding operation state.

Next, in step S18 the CPU 1 judges whether an operation to end the operation explanation image display has been performed by the user using the controller 19; if an end operation has not been performed, processing proceeds to step S19, and if an end operation has been performed, processing returns to step S5, and subsequent processing is continued. As judgment of this end operation, it is judged whether the above size change operation has been performed; that is, if the SELECT button 19e has been pressed by the user, it is judged that an end operation has been performed. In this case, the SELECT button 19e, which is an operation member not used for character manipulation, is employed, so that an end operation can be performed without having an effect on manipulation of the character by the user. Depression of other buttons provided on the controller 19 may also be set as the end operation.

Next, in step S19, the CPU 1 judges whether reproduction of the operation explanation image for the practice subject specified by the variable LID has ended; if reproduction of the operation explanation image has not ended, processing returns to step S18, and subsequent processing is repeated, and if reproduction of the operation explanation image has ended, processing proceeds to step S20, the operation explanation image for the practice subject specified by the variable LID is reproduced from the beginning, and then processing returns to step S18 and subsequent processing is repeated.

By means of the above processing, a moving image created in advance as the operation explanation image to explain model operation to the user (model operation images representing model actions of the snowboarder character) are stored in main memory 5, user operation images according to user operations received from the controller 19 (character images in which the snowboarder character performs actions according to user operations received from the controller 19) are created, and when the created user operation images are displayed on the television monitor 21, the stored operation explanation images are reproduced, and user operation images are displayed on the television monitor 21 simultaneously with the operation explanation images for those user operation images.

Hence the user can simultaneously view user operation images corresponding to his own operations and operation explanation images for the user operation images, and so can practice operation while viewing operation explanation images for the operation in question during operation. For example, if during operation the user does not understand the next operation, by referring to an operation explanation image, the next operation can be learned, and so understanding of the video game operation can be easily acquired.

Also, an operation explanation image comprises moving images, so that model actions of the snowboarder character can be thoroughly understood, and compared with the use of only a still image, more information can be imparted to the user. Hence operations can be explained to the user in a more easily understood manner, and the user can more easily acquire an understanding of the video game operation.

Because the above processing is performed in a practice mode provided to enable the user to practice character operations in a snowboarding game, a novice can easily acquire knowledge of operations of the snowboarding game in this practice mode, while a skilled player with no need to practice the operations of the snowboarding game can immediately play the snowboarding game without using the practice mode; thus snowboarding game operations can be learned according to the skill of the user.

In the above processing, the enlarged display window and reduced display window are used to display an operation explanation image superposed on a user operation image, so as to enable the user to view at a glance an operation explanation image; however, other display modes may be employed, such as for example dividing the display screen in two, with the operation explanation image displayed in one half and the user operation image displayed in the other half, so that the user operation image and operation explanation image are displayed simultaneously.

In the above game screen display processing, operation explanation images corresponding to the practice subject are displayed for each practice subject practiced by the user, and when the operation explanation image reproduction ends, reproduction is begun again from the beginning, and the operation explanation image is reproduced without relation to (asynchronously with) the state of user operation of the snowboarder character. However, the operation explanation image may be reproduced synchronized with the state of action of the snowboarder character or with the state of operation by the user.

Below, as an example of the above synchronous game screen display processing, synchronous game screen display processing in which the operation explanation image of practice subject 1 for practice of an ollie is reproduced in synchronization with the state of action of the snowboarder character is explained.

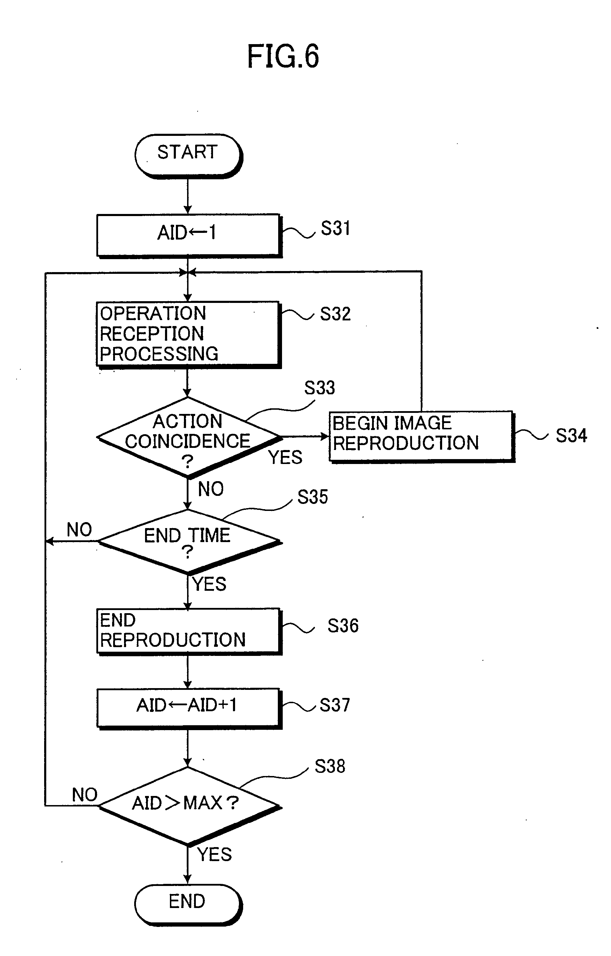

Fig. 6 is a flowchart showing an example of synchronous game screen display processing in practice mode. The synchronous game screen display processing shown in Fig. 6 is performed by execution, by the CPU 1, of a synchronous game screen display program or similar recorded on the recording media 300.

In step S31 shown in Fig. 6, the CPU 1 performs necessarily initial settings, and sets to "1" the variable AID to specify the action state of the snowboarder character being manipulated by the user using the controller 19.

Next, in step S32, the CPU 1 begins to accept operations on the snowboarder character by the user using the controller 19, similarly to ordinary game progress processing, and uses the graphic data generation processor 3 or similar to create user operation images of the actions of the snowboarder character according to these operations.

Then, in step S33, the CPU 1 judges whether the current action state of the snowboarder character being manipulated by the user using the controller 19 coincides with a reference action state, set in advance according to the value of the variable AID. If the current action state of the snowboarder character coincides with the reference action state, processing proceeds to step S34; if there is no coincidence, processing proceeds to step S35.

As reference action states for the practice subject 1, for example, five types of reference action state are set in advance: the state immediately after the start of the game; the state in which the snowboarder character approaches the front of the kicker; the state in which the snowboarder character jumps over the kicker; the state in which the snowboarder character has reached the highest point of the jump; and, the state in which the snowboarder character has jumped and is about to land.

Here, the CPU 1 judges, when the current value of the variable AID is 1, whether the current action state of the snowboarder character is the state immediately after the game start; when the current value of the variable AID is 2, whether the current action state of the snowboarder character is approaching the front of the kicker; when the current value of the variable AID is 3, whether the current action state of the snowboarder character is the snowboarder character jumping over the kicker; when the current value of the variable AID is 4, whether the current action state of the snowboarder character is jumping and has reached the highest point; and, when the current value of the variable AID is 5, whether the current action state of the snowboarder character has jumped and is about to land. The CPU 1 judges whether the current action state of the snowboarder character coincides with any of the respective reference action states.

When the current action state of the snowboarder character coincides with a reference action state, in step S34 the CPU 1 uses the image processor 10 or similar to reduce and display the operation explanation image of the practice subject 1 on the game screen on the television monitor 21, from the initiation time specified by the variable AID, so that a game screen such as that of Fig. 5 is displayed. Then, the CPU 1 returns to step S32, and subsequent processing is continued.

Here, the operation explanation image of the practice subject 1 is divided into a plurality of parts based on the reference action states of the snowboarder character, and the starting time and ending time for each part are stored in main memory 5 for each value of the variable AID. That is, the movie file which is the operation explanation image for practice subject 1 comprises a single file; the start times and end times for the part to be reproduced for each action state are stored in a table format, in association with the values of the variable AID. The number of movie files which are prepared in advance can be reduced; this is useful in cases when there is an upper limit to the number of files that can be stored in a single directory, as for example in the case of DVD.

For example, the start time and end time for operation explanation images to show model actions of the snowboarder character from the state immediately after the start of the game until the state in which the snowboarder character has approached the front of the kicker are associated with the variable value AID=1. Next, the start time and end time for operation explanation images to show model actions of the snowboarder character from the state of having come to the front of the kicker to the state of jumping over the kicker are associated with the variable value AID=2. Next, the start time and end time for operation explanation images to show model actions of the snowboarder character from the state of having jumped over the kicker to the state of having reached the highest point of the jump are associated with the variable value AID=3. Next, the start time and end time for operation explanation images to show model actions of the snowboarder character from the state of having reached the highest point to the state of being about to land are associated with the variable value AID=4. And, the start time and end time for operation explanation images to show model actions of the snowboarder character from the state of having jumped and being about to land, to the end of practice subject 1, are associated with the variable value AID=5.

The above movie file management method can be applied to the game screen display method shown in Fig. 3 as well; for example, the operation explanation images for practice subjects 1 to 10 may comprise a single movie file, and the start times and end times for each of the practice subjects may be stored in a table format in association with the values of the variable LID.

On the other hand, if the current action state of the snowboarder character does not coincide with a reference action state ("NO" in Step S33), in step S35, the CPU 1 judges whether the reproduction position of the operation explanation image has reached the end time specified by the variable AID; if the end time has not been reached, processing returns to step S32 and subsequent processing is repeated, and if the end time is reached, processing proceeds to step S36.

When the end time has been reached, in step S36, the CPU 1 ends reproduction of operation explanation images using the image processor 10 or similar, and causes only the user operation image to be displayed on the game screen of the television monitor 21. In this case, however, the operation explanation image may be reproduced once again from the start time specified by the variable AID, either according to user selection or automatically.

Next, in step S37, the CPU 1 increments the variable AID by one; for example, if the variable AID is currently 1, it is changed to 2. By thus updating the variable AID, the next action state of the snowboarder character, that is, the state in which the snowboarder character approaches the front of the kicker, is represented.

Then, in step S38, the CPU 1 judges whether the current value of the variable AID exceeds the maximum value MAX (in this example, five types of reference action states are set, so that MAX=5); if the value of the variable AID exceeds the maximum value MAX, processing returns to step S32 and subsequent processing is continued in order to practice the next action state. If on the other hand the value of the variable AID exceeds the maximum value MAX, reproduction of all the operation explanation images for practice subject 1 has ended, and so processing ends.

By means of the above processing, operation explanation images are reproduced in order, synchronized with the action state of the snowboarder character being manipulated by the user, and the user can practice operations while viewing the operation explanation image most suited to the current action being performed by the user himself, so that the snowboarding game operations can easily be learned. Also, operation explanation images are reproduced in order synchronized with the action states of the snowboarder character, so that the user can be appropriately notified of the timing of depression of each of the buttons of the controller 19.

In the above synchronous processing, the case in which a single practice subject is practiced was explained; however, a plurality of practice subjects may be practiced. In this case, operation explanation images are reproduced in order for each practice subject, synchronized with the action state of the snowboarder character. Also, in the above synchronous processing, processing for skip operations and for enlargement and end operations was omitted; however, these operations may be accepted similarly to the case of the asynchronous processing shown in Fig. 3, and the operation explanation image enlarged or reduced accordingly.

In each of the above explanations, the user operation image and operation explanation image were displayed simultaneously in practice mode. However, the present invention is not limited to this example, and in addition to practice mode, user operation images and operation explanation images may be displayed simultaneously when the user is playing the video game, either according to user selection or automatically.

Also, in each of the above explanations, operation explanation images were used to instruct the user in operation; however, the information to be provided to the user as operation explanations is not limited to images only, and audio may be used as well. For example, audio or other data may be added to an operation explanation image for explanation of operation, and explanatory text may be provided by means of audio output.

In summary, the present invention takes a form of a recording medium which stores a game screen display program, which employs a video game device comprising an operating unit for accepting user operations and a display unit for displaying a game screen and displays game screen according to user operations, and which causes the above video game device to function as: storage means, which stores moving images (or animated images) created in advance as operation explanation images in order to explain model operation of the above operating unit to the user; image creation means, which creates user operation images according to user operations accepted by the above operating unit; and display control means, which reproduces operation explanation images stored by the above storage means when displaying user operation images created by the above image creation means on the above display unit, and simultaneously displays the above user operation images and operation explanation images for the user operation images on the above display unit.

According to the aforementioned form of the invention, a game screen display program which uses a video game device, comprising an operating unit for accepting t user operations and a display unit for displaying game screens and displays game screens according to user operations, causes the video game device to function as storage means, which stores moving images created in advance as operation explanation images to explain model operations for the operating unit to the user; image creation means, which creates user operation images according to user operations accepted by the operating unit; and display control means, which reproduces operation explanation images stored by the storage means when displaying user operation images created by the image creation means on the display unit, and simultaneously displays user operation images and operation explanation images for the user operation images.

In other words, by means of a video game device comprising an operating unit for accepting user operations and a display unit for displaying game screens, moving images created in advance as operation explanation images to explain model operation of the operating unit to the user are stored, user operation images are created according to user operations received by the operating unit, and when a created user operation image is displayed on the display unit, a stored operation explanation image is reproduced, and the operation explanation image for the user operation image is displayed simultaneously with the user operation image on the display unit.

Hence the user can simultaneously view user operation images corresponding to his own operations and operation explanation images for the user operation images, and so can practice operation while viewing operation explanation images for the operation in question during operation. For example, if during operation the user does not understand the next operation, by referring to an operation explanation image, the next operation can be learned, and so understanding of the video game operation can be easily acquired.

Also, an operation explanation image comprises moving images, so that compared with the use of only a still image, more information can be imparted to the user. Hence operations can be explained to the user in a more easily understood manner, and so the user can more easily acquire an understanding of the video game operation.

In the aforementioned invention, the above display control means can be characterized such that the above user operation image and the above operation explanation image are displayed simultaneously on the above display unit in the practice mode provided for the user to practice operation of the video game.

According to the invention with the aforementioned feature, in the practice mode in which the user practices video game operation, the display control means simultaneously displays a user operation image and an operation explanation image on the display unit.

That is, in the practice mode provided for the user to practice video game operation, a user operation image and operation explanation image are displayed simultaneously on the display unit, so that a novice can easily acquire an understanding of video game operation in this practice mode; also, a skilled player who has no need to acquire knowledge of video game operation can play the video game directly without using the practice mode, so that video game operation can be learned according to the skill of the user.

In addition, the present invention can be characterized such that the above operating unit receives operations on a character which can be manipulated by the user in a game space; the above image creation means creates character movement images depicting character movement according to operations accepted by the above operating unit; the above operation explanation image comprises a model movement image consisting of moving images representing model movements of the character; and the above display control means simultaneously displays the above character movement images and the above model movement images.

According to the invention with the aforementioned features, the operating unit receives operations on a character which can be manipulated by the user in a game space, and the image creation means creates character movement images depicting character movement according to the operation received by the operating unit. Operation explanation images comprise model movement images consisting of moving images representing the model movement of the character, and the display control means simultaneously displays, on the display unit, character movement images depicting character movement according to user operations, and model movement images representing model movement of the character.

That is, operations on a character which can be manipulated by the user in a game space are received, character movement images depicting character movement are created according to the received operations, and these character movement images are displayed on the display unit simultaneously with model movement images consisting of moving images representing model movement of the character.

Hence when a user acquires knowledge of operations on a character, the character movement images depicting movement of the character according to operations can be seen simultaneously with model movement images representing model movement of the character, so that operation can be practiced while directly viewing model movement of the character during operations, and an intuitive understanding of operations can be achieved.

The present invention can be further characterized in that the above display control means displays explanatory text, to explain an operation necessary for model movement displayed by the model movement image, when displaying the above model movement image, with the text held in a stationary state for a prescribed length of time.

According to the invention with the aforementioned features, the display control means displays explanatory text which explains an operation necessary to perform a model movement displayed by a model movement image when the model movement image is displayed, with the text held stationary for a prescribed length of time.

That is, explanatory text to explain an operation necessary to perform a model movement, displayed by a model movement image when the model movement image is displayed, is displayed in a stationary state for a prescribed length of time, so that the user can easily view the explanatory text, and information not easily explained by moving images alone can easily be conveyed to the user through sentences or similar means.

Moreover, the invention can be characterized in that the above display control means simultaneously displays, on the above display unit, the above user operation image and the above operation explanation image, in a display mode enabling discrimination of the above operation explanation image from the above user operation image.

According to the invention with the aforementioned features, the display control means simultaneously displays on the display unit a user operation image and operation explanation image, in a display mode enabling discrimination of the operation explanation image from the user operation image.

That is, a user operation image and operation explanation image are displayed simultaneously, in a display mode which enables discrimination of the operation explanation image from the user operation image, so that the user can recognize at a glance which of the images is the operation explanation image. For example, by displaying the user operation image in the entirety of the display screen of the display unit, and displaying the operation explanation image in a small prescribed window superposed on the user operation image, the user can recognize the operation explanation image at a glance.

Furthermore, the present invention can be further characterized in that the above display control means enlarges or reduces the above operation explanation image, according to user operations using the above operating unit, and displays the above operation explanation image superposed on the above user operation image.

According to the invention with the aforementioned features, the display control means enlarges or reduces the operation explanation image according to operation by the user using the operating unit, and displays the operation explanation image superposed on the user operation image.

That is, an operation explanation image which has been enlarged or reduced according to user operation using the operating unit is displayed superposed on the user operation image, so that the operation explanation image can be displayed at a size suited to the user needs. For example, if the user wishes to understand operations in greater detail, the operation explanation image may be enlarged so that the operation explanation image is easier to view; if the user wishes to concentrate on operation, the operation explanation image can be reduced, making the user operation image easier to view.

Yet moreover, the invention can be characterized in that, when the above display control means enlarges the above operation explanation image for display, the above operation explanation image is displayed in substantially the center position of the display screen of the above display unit, and that, when the above display control means reduces the above operation explanation image for display, the above operation explanation image is displayed near an edge of the display screen of the above display unit.

According to the invention with the aforementioned features, when enlarging the operation explanation image for display, the display control means displays the operation explanation image in substantially the center position of the display screen of the display unit, and when reducing the operation explanation image, the display control means displays the operation explanation image near the edge of the display screen of the display unit.

That is, when the operation explanation image is enlarged and displayed, the operation explanation image is displayed in substantially the center position of the display screen, whereas when the operation explanation image is reduced and displayed, the operation explanation image is displayed near an edge of the display screen; hence when the user wishes to understand the operation in greater detail, the operation explanation screen can be displayed to enable easier viewing, and when the user wishes to concentrate on operation, the user operation screen can be displayed to enable easier viewing.

Moreover, the present invention can be characterized in that, when the above operation explanation image is enlarged and displayed by the above display control means, the above image creation means halts the above user operation image, without receiving user operations from the above operating unit.

According to the invention with the aforementioned features, when an operation explanation image is enlarged and displayed by the display control means, the image creation means halts the user operation image, without receiving user operations from the operating unit.

That is, when the operation explanation image is enlarged for display, the user operation image is halted without receiving user operations from the operating unit; hence after viewing the enlarged operation explanation image and confirming the operation to be performed, the user can again resume operations from the operating state immediately preceding the enlargement of the operation explanation image.

The present invention also takes a form of a game screen display method, which uses a video game device comprising an operating unit for accepting user operations, a display unit for displaying game screens, and storage means for storing moving images created in advance as operation explanation images in order to explain model operation of the above operating unit to the user, for displaying game screens according to user operations, wherein the game screen display method comprises an image creation step, in which the above video game device creates a user operation image according to user operations received by the above operating unit; and a display step, in which the video game device reproduces an operation explanation image stored by the above storage means when displaying a user operation screen created in the above image creation step on the above display unit, and displays the above user operation image and the operation explanation image for the user operation image simultaneously on the above display unit.

According to the invention in the aforementioned form, a video game device, comprising an operating unit for accepting user operations and a display unit for displaying game screens, further comprises storage means which stores moving images created in advance as operation explanation images to explain model operation of the operating unit to the user; and the game screen display method, in which this video game device is used to display a game screen according to user operations, comprises an image creation step, in which a user operation image is created according to user operations received by the operating unit, and a display step, in which the video game device reproduces an operation explanation image stored by the above storage means when displaying a user operation screen created in th0e above image creation step on the above display unit, and displays the above user operation image and the operation explanation image for the user operation image simultaneously on the above display unit.

That is, by means of a video game device comprising an operating unit which receives user operations and a display unit which displays game screens, moving images created in advance as operation explanation images to explain model operation of the operating unit to the user are stored; user operation images are created corresponding to user operations received by the operating unit; and when a created user operation image is displayed on the display unit, a stored operation explanation image is reproduced, and the user operation image is displayed on the display unit simultaneously with the operation explanation image for that user operation image.

Hence the user can simultaneously view a user operation image corresponding to his own operations and an operation explanation image for that user operation image, so that operation can be practiced while viewing an operation explanation image for the operation in question. For example, when during operation the user does not know which operation is next, by referring to the operation explanation screen, the next operation can be determined, and so knowledge of video game operation can be easily acquired.

Also, because the operation explanation images comprise moving images, more information can be imparted to the user than in cases where only stationary images are used. Consequently operations can be explained to the user in an easily understood manner, and the user can more easily acquire knowledge of video game operations.

The present invention also takes a form of a video game device, comprising an operating unit for accepting user operations; a display unit which displays game screens; storage means for storing moving images created in advance as operation explanation images to explain model operation of the above operating unit to the user; image creation means for creating user operation images according to user operations accepted by the above operating unit; and, display control means for reproducing an operation explanation image stored in the above storage means when a user operation image created by the above image creation means is displayed on the above display unit, and for displaying the above user operation image simultaneously with an operation explanation image for the user operation image on the above display unit.

According to the invention in the aforementioned form, a video game device comprising an operating unit which receives user operations and a display unit which displays game screens, and which displays game screens according to user operations, further comprises storage means, which stores moving images created in advance as operation explanation images to explain model operation of the operating unit to the user; image creation means, which creates user operation images according to user operations received by the operating unit; and display control means, which reproduces operation explanation images stored by the storage means when displaying user operation images created by the image creation means on the display unit, and which displays user operation images on the display unit simultaneously with operation explanation images for the user operation images.

That is, by means of a game device comprising an operating unit to accept user operations and a display unit to display game screens, moving images created in advance as operation explanation images to explain model operation of the operating unit to the user are stored, user operation images corresponding to user operations received from the operating unit are created, and, when a created user operation image is displayed on the display unit, a stored operation explanation image is reproduced, and the user operation image is displayed on the display unit simultaneously with an operation explanation image for that user operation image.

Hence the user can simultaneously view a user operation image corresponding to his own operations and an operation explanation image for the user operation image, and so during operation can practice operations while viewing an operation explanation image. For example, when during operation the user does not know which operation is next, by referring to the operation explanation screen, the next operation can be determined, and so knowledge of video game operation can be easily acquired.

Also, operation explanation images comprise moving images, so that more information can be imparted to the user than when stationary images alone are used. Hence operations can be explained to the user in an easily understood manner, and the user can more easily acquire knowledge of video game operation.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A recording medium storing a game screen display program, which employs a video game device comprising an operating unit for accepting user operations and a display unit for displaying a game screen, for displaying game screens according to user operations, wherein said game screen display program causes said video game device to function as:
storage means for storing moving images created in advance as operation explanation images in order to explain model operation of said operating unit to the user;
image creation means for creating user operation images according to user operations accepted by said operating unit; and,
display control means for reproducing operation explanation images stored by said storage means when displaying user operation images created by said image creation means on said display unit, and for displaying said user operation images simultaneously with said operation explanation images for the user operation images on said display unit.

2. The recording medium according to claim 1, wherein said display control means displays said user operation images simultaneously with said operation explanation images on said display unit in a practice mode provided for the user to practice operations in the video game.

3. The recording medium according to claim 1 or claim 2, wherein
said operating unit receives operations on a character which can be manipulated by the user in a game space;
said image creation means creates character movement images depicting character movement according to operations accepted by said operating unit;
said operation explanation image includes a model movement image set, comprised of moving images representing a model movement of the character; and,
said display control means simultaneously displays said character movement images and said model movement images on said display unit.

4. The recording medium according to claim 3, wherein said display control means displays explanatory text, to explain an operation necessary for model movement displayed by the model movement image when said model movement image is displayed, with the text held in a stationary state for a predetermined time period.

5. The recording medium according to any of claims 1 through 4, wherein said display control means simultaneously displays, on said display unit, said user operation image and said operation explanation image, in a display mode enabling discrimination of said operation explanation image from said user operation image.

6. The recording medium according to any of claims 1 through 5, wherein said display control means enlarges or reduces said operation explanation image, according to user operations using said operating unit, and displays said operation explanation image superposed on said user operation image.

7. The recording medium according to claim 6, wherein, when said display control means enlarges and displays said operation explanation image, said operation explanation image is displayed in substantially the center position of the display screen of said display unit, and, when said display control means reduces said operation explanation image for display, said operation explanation image is displayed near an edge of the display screen of said display unit.

8. The recording medium according to claim 6 or claim 7, wherein, when said operation explanation image is enlarged and displayed by said display control means, said image creation means halts said user operation image, without receiving user operations from said operating unit.

9. A game screen display method, which uses a video game device comprising an operating unit for accepting user operations, a display unit for displaying a game screen, and storage means for storing moving images created in advance as operation explanation images in order to explain model operation of said operating unit to the user, for displaying game screens according to user operations, wherein the game screen display method comprising the steps of:
an image creation step, in which said video game device creates a user operation image according to user operations accepted by said operating unit; and
a display step, in which said video game device reproduces an operation explanation image stored by said storage means when displaying a user operation image created in said image creation step on said display unit, and displays said user operation image and the operation explanation image for the user operation image simultaneously on said display unit.

10. A video game device comprising:
an operating unit for accepting user operations;
a display unit for displaying game screens,
storage means for storing moving images created in advance as operation explanation images to explain model operation of said operating unit to the user;
image creation means for creating user operation images according to user operations accepted by said operating unit; and,
display control means for reproducing an operation explanation image stored in said storage means when a user operation image created by said image creation means is displayed on said display unit, and for displaying said user operation image simultaneously with an operation explanation image for the user operation image on said display unit.

11. A game screen display program, which employs a video game device comprising an operating unit for accepting user operations and a display unit for displaying a game screen, for displaying game screens according to user operations, wherein said game screen display program causes said video game device to function as:
storage means for storing moving images created in advance as operation explanation images in order to explain model operation of said operating unit to the user;
image creation means for creating user operation images according to user operations accepted by said operating unit; and,
display control means for reproducing operation explanation images stored by said storage means when displaying user operation images created by said image creation means on said display unit, and for displaying said user operation images simultaneously with said operation explanation images for the user operation images on said display unit.
